# FASCICULE DE BREVET EUROPEEN

(11) **EP 1 036 966 B1**
(45) Date de publication et mention de la délivrance du brevet: **05.04.2006**
(21) Numéro de dépôt: 00400082.4
(22) Date de dépôt: 13.01.2000
(51) Int. Cl.: F16L 3/10

(54) **Attache pour la fixation de tubes ou analogues**
Klemme zum Befestigen von Rohren oder ähnlichem
Clip for fastening tubes or the like

(30) Priorité: 05.03.1999 FR 9902787
(43) Date de publication de la demande: 20.09.2000
(73) Titulaire: Lisi Automotive Rapid, 95650 Puiseux Pontoise (FR)
(72) Inventeur: Leon, Jean-Pierre René, 78800 Houilles (FR)
(74) Mandataire: Berger, Helmut

(56) Documents cités:
- FR-A- 2 720 137
- US-A- 5 277 387

## Description

La présente invention concerne une attache perfectionnée pour la fixation de tubes ou analogues, sur un élément de construction quelconque ou sur un véhicule, selon le préambule de la revendication 1.

Des attaches de fixation de ce type sont déjà connues par le brevet US 5 277 387.

Ces attaches connues présentent l'inconvénient qu'elles ont une structure très complexe.

L'invention a pour but de pallier cet inconvénient.

Pour atteindre ce but, l'attache selon l'invention comporte les caractéristiques qui sont énoncées dans la partie caractérisante de la revendication 1.

D'autres caractéristiques font l'objet de revendications dépendantes.

L'invention sera mieux comprise et d'autres buts, avantages et caractéristiques de celle-ci apparaîtront plus clairement à la lecture de la description qui suit et qui est faite au regard des dessins annexés qui représentent des exemples non limitatifs de réalisation de l'invention et sur lesquels :
- La figure 1 est une vue de côté et en élévation d'une attache de fixation selon l'invention, comportant une partie de fermoir en position ouverte ;
- La figure 2 est une vue similaire à la figure 1, dans laquelle un tube est reçu dans l'attache, la partie de fermoir étant en position fermée sur le tube ;
- La figure 3 est une vue en coupe longitudinale selon III-III de la figure 2, le tube étant en position de repos ;
- La figure 4 est une vue similaire à la figure 3, dans laquelle le tube occupe une première position maximale et
- La figure 5 est une vue similaire aux figures 3 et 4, dans laquelle le tube occupe une deuxième position maximale.

Les éléments communs aux différentes figures seront désignés par les mêmes références.

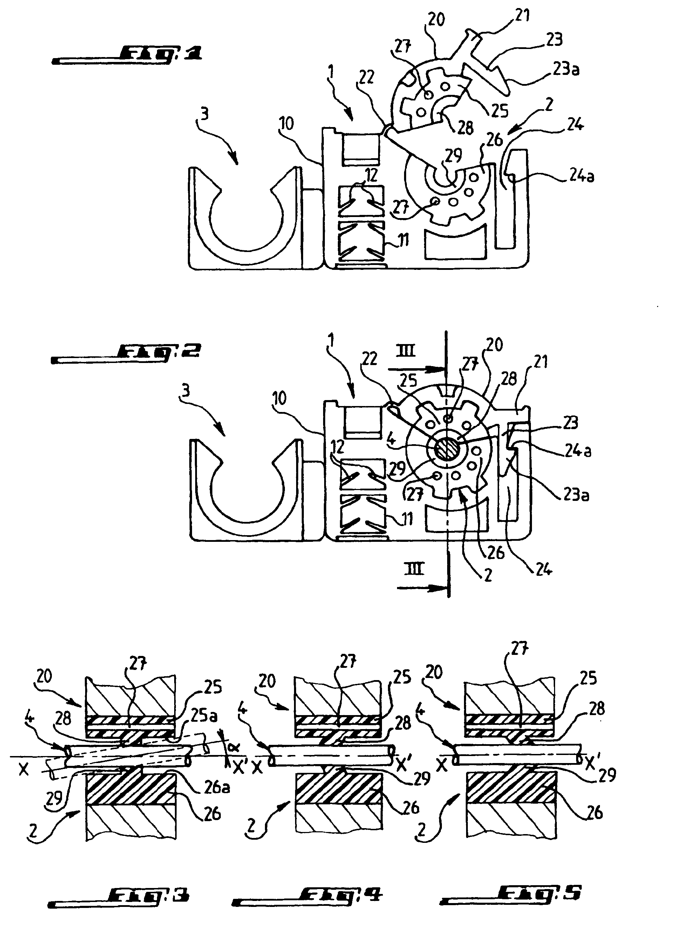

La figure 1 illustre une attache de fixation selon l'invention qui est obtenue par moulage de matières plastiques appropriées.

Cette attache comprend essentiellement un fût 1 présentant de part et d'autre une partie en forme de berceau 2, 3, chacune d'elles étant apte à recevoir un faisceau de câbles ou une tuyauterie (non représentés) devant être rendus solidaire d'un véhicule automobile par exemple.

La partie en forme de berceau 2 est associée à une partie de fermoir 20 qui est apte à se refermer sur la partie en berceau 2. A cet effet, la partie de fermoir 20 comporte, du côté 21 opposé à la charnière 22 qui la relie à la partie en berceau 2, une patte 23 qui est destinée à venir s'encliqueter dans une encoche 24 prévue dans l'attache de fixation.

Le fût 1 est classiquement formé de deux parois parallèles 10 et 11 qui comportent une pluralité de lèvres 12 dirigées vers l'intérieur du fût.

Ces lèvres laissent entre elles un passage qui est inférieur au diamètre d'une vis (non représentée) sur laquelle l'attache selon l'invention pourra être montée classiquement par simple pression. Ainsi, la vis peut pénétrer dans le fût 1, par son extrémité libre opposée à la tête, la tête étant elle-même fixée sur un élément quelconque, notamment d'un véhicule automobile. Les lèvres coopèrent avec le filetage de la vis pour maintenir l'attache sur l'élément.

L'ensemble de l'attache de fixation représentée à la figure 1 est réalisé en une seule matière plastique relativement rigide, à l'exception d'une couche 25, respectivement 26 fixée sur la face intérieure de la partie de fermoir 20, respectivement de la partie en berceau 2.

Cette couche interne est réalisée en un matériau plastique plus souple que celui du reste de l'attache de fixation. Il peut notamment s'agir d'un caoutchouc thermo-injectable.

Ainsi, l'attache de fixation selon l'invention peut être obtenue par moulage par injection de deux matières plastiques différentes, dans un même moule.

Dans l'exemple de réalisation illustré à la figure 1, des évidements 27 sont prévus dans chacune des couches internes 25 et 26. Ils s'étendent longitudinalement, selon l'axe xx' de la partie en berceau 2 et de la partie de fermoir 20. Ces évidements contribuent à freiner la transmission des vibrations.

De plus, chacune des couches internes 25, 26 en matériau relativement souple comporte, sur sa surface extérieure 25a, 26a, un élément en saillie 28, 29 réalisé également en un matériau souple et disposé transversalement, c'est-à-dire dans le plan de la figure 1 ou encore perpendiculairement à l'axe longitudinal xx' de la partie en berceau 2.

La fonction de ces deux éléments en saillie 28 et 29 sera expliquée plus en détail dans la suite de la description.

Les différentes figures montrent que, dans l'exemple d'attache de fixation illustré, les éléments en saillie ont une forme semi-annulaire et qu'ils sont disposés sensiblement en vis-à-vis.

Ainsi, lorsque l'attache de fixation selon l'invention est utilisée pour recevoir par exemple un tube 4 et que la partie de fermoir 20 est refermée sur le tube 4 et la partie en forme de berceau 2, ces deux éléments en saillie forment sensiblement une collerette.

La figure 2 montre que la patte 23 de la partie de fermoir 20 reste en place dans la rainure 24 grâce à la coopération de l'ergot 23a prévu à l'extrémité de la patte 23 et de l'épaulement 24a prévu à l'entrée de la rainure 24.

La partie de fermoir 20 peut être ouverte pour libérer le tube 4, en ouvrant la rainure 24, grâce à l'élasticité, même faible, du matériau plastique constituant l'attache de fixation.

On se réfère maintenant aux figures 3 à 5.

Ces figures montrent que, dans l'exemple de réalisation représenté, les éléments en saillie 28 et 29, semi-annulaires, sont l'un et l'autre disposés dans une position médiane de la partie de fermoir 20 et de la partie en berceau 2. Mais l'invention n'est pas limitée à ce mode de réalisation.

Les figures 3 à 5 sont des représentations schématiques. En particulier, l'insertion du tube 4 dans la partie 2 en forme de berceau et la partie de fermoir 20 conduit à un léger écrasement des éléments en saillie 28 et 29, écrasement qui n'est pas représenté sur les figures.

Ces figures montrent que le tube 4 n'est pas en contact avec toute la paroi interne 25a, respectivement 26a de chaque couche interne 25, 26. Au contraire, le tube 4 est essentiellement en contact avec les deux éléments en saillie 28, 29.

Ceci distingue l'invention des attaches de fixation classiques dans lesquelles un tube est en contact avec la partie en forme de berceau et la partie de fermoir selon pratiquement toute leur longueur.

Cette disposition présente tout d'abord l'avantage de rattraper des défauts d'alignement.

En effet, l'angle α que peut former l'axe du tube 4 avec l'axe longitudinal xx' de la partie en forme de berceau 2, peut être plus important avec l'attache de fixation selon l'invention dans laquelle le tube n'est retenu qu'au niveau des éléments en saillie, qu'avec une attache classique où le tube est retenu selon toute la longueur de la partie 2 en forme de berceau et de la partie de fermoir 20.

Un tube 4 faisant un angle α avec l'axe xx' de la partie en forme de berceau 2 est illustré en traits pointillés à la figure 3.

De plus, comme le montrent les figures 4 et 5, les éléments en saillie 28 et 29 agissent comme un diaphragme.

Les vibrations véhiculées par le tube 4 sont tri-dimensionnelles. Cependant, les vibrations les plus importantes apparaîssent selon l'axe longitudinal xx' de la partie en berceau 2.

La figure 4 montre la position relative des éléments en saillie 28, 29 et du tube 4 lorsque les vibrations sont maximales dans un sens. On voit que les éléments en saillie sont déformés tous les deux vers la gauche sur le dessin.

La figure 5 montre les éléments en saillie 28 et 29 avec des vibrations maximales dans le sens opposé de la figure 4. Dans ce cas, les éléments en saillie 28 et 29 sont inclinés vers la droite sur le dessin.

Ces figures 4 et 5 montrent schématiquement que la collerette formée par les éléments en saillie 28 et 29 agit comme un diaphragme en flexion et permet d'absorber efficacement les vibrations selon l'axe xx' de la partie en berceau 2.

L'attache de fixation permet ainsi de mieux absorber les vibrations que les attaches classiques dans lesquelles un tube est en contact avec toute la longueur de la partie en berceau. Dans ce cas, le tube ne peut pas se déplacer par rapport à la partie en forme de berceau et notamment ne peut pas tourner.

Au contraire, l'attache de fixation selon l'invention permet un débattement du tube à l'intérieur de la partie en forme de berceau et de la partie de fermoir, ce qui favorise l'amortissement des vibrations.

L'attache de fixation selon l'invention trouve de nombreuses applications, notamment pour tout tube transportant un liquide sous pression et susceptible de transmettre des vibrations. Cette attache pourra avantageusement être utilisée sur la direction assistée ou le système de freinage d'un véhicule automobile.

Les signes de référence insérés après les caractéristiques techniques figurant dans les revendications ont pour seul but de faciliter la compréhension de ces dernières et ne sauraient en limiter la portée.

## Revendications

1. Attache de fixation de tubes ou analogues, du type comportant un fût (1) destiné à coopérer avec le filetage d'une vis et au moins une partie (2) en forme de berceau apte à recevoir un tube ou analogue (4) et associée à une partie de fermoir (20), destinée à se refermer sur ledit tube ou analogue, **caractérisée en ce que** la partie (2) en forme de berceau et la partie de fermoir (20), comportent chacune, sur leur face intérieure, une couche interne (26, 25) en un matériau plus souple que le reste de l'attache, chacune desdites couches internes (25, 26) en matériau souple comporte, sur sa surface extérieure (25a, 26a), un élément en saillie (28, 29) réalisé également en un matériau souple et disposé transversalement, ledit tube (4) ou analogue étant destiné à venir en contact avec lesdits éléments en saillie lorsque la partie en berceau est fermée par la partie de fermoir et **en ce que** lesdits éléments en saillie (28, 29) sont semi-annulaires et disposés de façon à former sensiblement une collerette lorsque la partie en berceau (2) est fermée par la partie de fermoir (2), ledit tube (4) ou analogue étant alors destiné à venir en contact avec ladite collerette.

2. Attache selon la revendication 1, **caractérisée en ce que** lesdits éléments en saillie (28, 29) sont prévus sensiblement dans la partie médiane de la partie en berceau (2) et de la partie de fermoir (20).

3. Attache selon l'une des revendications 1 ou 2, **caractérisée en ce que** lesdits éléments en saillie (28, 29) sont réalisés en un même matériau que lesdites couches internes (25, 26).

4. Attache selon l'une des revendications 1 à 3, **caractérisée en ce que** des évidements (27) sont prévus dans au moins une couche interne (25, 26).

5. Attache selon l'une des revendications 1 à 4, **caractérisée en ce qu'**elle est obtenue par moulage de matières plastiques injectées.

## Patentansprüche

1. Klemme zum Befestigen von Rohren oder dergleichen, vom Typ mit einem Schaft (1), der dazu bestimmt ist, mit dem Gewinde einer Schraube zusammenzuwirken, und mit zumindest einem trogförmigen Teil (2), das ein Rohr oder dergleichen (4) aufnehmen kann und einem Schließteil (20) zugeordnet ist, das dazu bestimmt ist, sich über das genannte Rohr oder dergleichen zu schließen, **dadurch gekennzeichnet, dass** das trogförmige Teil (2) und das Schließteil (20) jeweils an ihrer Innenseite eine Innenlage (26, 25) aus einem weicheren Material als die restliche Klemme enthalten, wobei jede der genannten Innenlagen (25, 26) aus weicherem Material an ihrer Außenfläche (25a, 26a) ein vorspringendes Element (28, 29) enthalt, das auch aus einem weicheren Material ausgeführt und quer verlaufend angeordnet ist, wobei das genannte Rohr oder dergleichen (4) dazu bestimmt ist, mit den vorspringenden Elementen in Kontakt zu gelangen, wenn das trogförmige Teil von dem Schließteil verschlossen wird, und dass die vorspringenden Elemente (28, 29) halbringförmig ausgeführt und so angeordnet sind, dass sie im wesentlichen einen Kragen bilden, wenn das trogförmige Teil (2) von dem Schließteil (2) verschlossen wird, wobei das Rohr oder dergleichen (4) dann dazu bestimmt ist, mit dem genannten Kragen in Kontakt zu gelangen.

2. Klemme nach Anspruch 1, **dadurch gekennzeichnet, dass** die vorspringenden Elemente (28, 29) im wesentlichen in dem Mittelbereich von dem trogförmigen Teil (2) und dem Schließteil (20) vorgesehen sind.

3. Klemme nach einem der Ansprüche 1 oder 2, **dadurch gekennzeichnet, dass** die vorspringenden Elemente (28, 29) aus einem gleichen Material wie die Innenlagen (25, 26) hergestellt sind.

4. Klemme nach einem der Ansprüche 1 bis 3, **dadurch gekennzeichnet, dass** in zumindest einer Innenlage (25, 26) Ausnehmungen (27) vorgesehen sind.

5. Klemme nach einem der Ansprüche 1 bis 4, **dadurch gekennzeichnet, dass** sie durch Spritzgießen aus Kunststoff erhalten wird.

## Claims

1. Clip for fastening tubes or the like, of the type including a barrel (1) intended to co-operate with the thread of a screw and at least one part (2) shaped like a cradle capable of receiving a tube or the like (4) and connected to a clasp part (20), intended to close on said tube or the like, **characterised in that** the cradle-shaped part (2) and the clasp part (20) each have, on their internal face, an internal layer (26, 25) of a material more flexible than the rest of the clip, each of said internal layers (25, 26) of flexible material having, on its external surface (25a, 26a), a projecting element (28, 29) also made of a flexible material and arranged transversely, said tube (4) or the like being intended to come into contact with said projecting elements when the cradle-shaped part is closed by the clasp part, and **in that** said projecting elements (28, 29) are semi-annular and arranged in such a way as to form approximately a flange when the cradle-shaped part (2) is closed by the clasp part (20), said tube (4) or similar being then intended to come into contact with said flange.

2. Clip according to claim 1, **characterised in that** said projecting elements (28,29) are provided approximately in the median part of the cradle-shaped part (2) and of the clasp part (20).

3. Clip according to one of claims 1 or 2, **characterised in that** said projecting elements (28, 29) are made of the same material as said internal layers (25, 26).

4. Clip according to one of claims 1 to 3, **characterised in that** cavities are provided in at least one internal layer (25, 26).

5. Clip according to one of claims 1 to 4, **characterised in that** it is produced by injection moulding of plastic materials.
